# EUROPÄISCHE PATENTSCHRIFT

(11) **EP 0 898 151 B1**
(45) Veröffentlichungstag und Bekanntmachung des Hinweises auf die Patenterteilung: **24.07.2002**
(21) Anmeldenummer: 98103530.6
(22) Anmeldetag: 28.02.1998
(51) Int. Cl.: G01D 18/00, G01D 5/353, G01K 11/32, G01D 3/02

(54) **Verfahren und Anordnung zur Konfigurierung einer Messanordnung**
Method and arrangement for configuring a measuring device
Méthode et appareil pour la configuration d'un dispostif de mesure

(30) Priorität: 22.08.1997 DE 19736513
(43) Veröffentlichungstag der Anmeldung: 24.02.1999
(73) Patentinhaber: LIOS Technology GmbH, 51063 Köln (DE)
(72) Erfinder: Glombitza, Ulrich, Dr.-Ing., 51429 Bergisch Gladbach (DE); Simonits, Dino, Dipl.-Ing., 50670 Köln (DE)

(56) Entgegenhaltungen:
- EP-A- 0 450 829
- PATENT ABSTRACTS OF JAPAN vol. 097, no. 001, 31. Januar 1997 & JP 08 247858 A (TOSHIBA CORP), 27. September 1996 -& US 5 765 948 A (SAI YUKIO) 16. Juni 1998
- PATENT ABSTRACTS OF JAPAN vol. 011, no. 126 (P-569), 21. April 1987 & JP 61 270632 A (HITACHI CABLE LTD), 29. November 1986

## Beschreibung

Die Erfindung betrifft ein Verfahren zur Konfigurierung einer Meßanordnung für physikalische, insbesondere thermische Meßgrößen auf einer Meßstrecke mit mindestens einem örtlich verteilten Sensor. Weiterhin wird eine zugehörige Anordnung beansprucht.

Die Meßanordnung soll der Erfassung physikalischer Meßgrößen auf der Meßstrecke dienen, wie Temperatur, Druck, Zug, Biegung und/oder ihre zeitlichen Änderungen. Als örtlich verteilte Sensoren werden solche Sensoren verstanden, die simultan Streckeninformationen und physikalische Daten liefern. Zwei Haupttypen von örtlich verteilten Meßsensoren sind bekannt, solche die elektrisch und andere die optisch arbeiten.

Als Meßstrecke wird nicht nur eine lineare, sondern auch eine zwei- oder dreidimensionale Installationen eines verteilten Sensors verstanden. Dabei kann es sich auch um flächige (z.B. mäanderförmig) oder räumliche Installationen handeln, beispielsweise Bewicklung eines Reaktorgefäßes.

In den letzten Jahren sind optische Meßgeräte unter Nutzung der Ramanrückstreuung mit mindestens einer ausgelegten LWL-Faser auf den Markt gekommen (DE 195 25 626 A1).

Ein anderes Beispiel für ein optisches LWL-Meßgerät auf Druck findet sich in der DE 38 09 957 A1. Ein verteilter LWL-Feuchtesensor wird in der DE 195 30 985 C1 beschrieben.

Die bekannten Meßanordnungen sind sehr speziell auf bestimmte Anwendungen zugeschnitten.

Es ist Aufgabe der Erfindung, ein Verfahren und eine entsprechende Anordnung zur Konfigurierung einer Meßanordnung für physikalische Meßgrößen auf einer Meßstrecke mit mindestens einem örtlich verteilten Sensor anzugeben, so daß die Meßanordnung mit hoher Flexibilität auf die physikalischen, örtlichen und zeitlichen Gegebenheiten einer Meßstrecke individuell einstellbar ist. Dadurch soll weiterhin eine vielseitige Qualität der Kontrolle, der Bearbeitung und/oder der Wiedergabe der Meßwerte erreicht werden.

Die Lösung der Aufgabe findet sich in den unabhängigen Ansprüchen. In den abhängigen Ansprüchen sind vorteilhafte Weiterbildungen der Erfindung beansprucht

Die wesentlichen Teile der Meßanordnung sind neben den Sensoren und dem physikalischen Meßgerät:
- eine Datenbibliothek mit Parametersätzen, die mindestens umfassen: meßstreckenspezifische Parameter (im wesentlichen Orts- und Teilstreckendaten der Meßstrecke); Sätze von Konfigurierungsparametern (auch als Werkzeuge bezeichnet) sensorspezifische Parameter; meßgerätespezifische Parameter; Organisation von Daten und Programmen, Organisation von Hardwaremodulen; Darstellung und Übermittlung der Daten (Kommunikationsparameter),
- eine Einrichtung zur Konfigurierung der programmierbaren Module der Meßanordnung mit aus der Datenbibliothek entnehmbaren Parametersätzen,
- die Module der Meßanordnung sollen mindestens geeignet sein, Meßgrößen zu erfassen, zu bearbeiten, zu speichern, darzustellen und zu melden. Unter Module werden nicht unbedingt einzelne körperlich trennbare Module verstanden, es kann sich auch um Module handeln, die mehrere Aufgaben gemeinsam erledigen können.

Die verfahrensmäßige Erfindung besteht in der Konfigurierung einer solchen Meßanordnung, die so programmiert ist, daß zonenbezogenen Daten der Meßstrecke zonenbezogenen Meßgrößen zugeordnet und diese Daten zu Datengruppen zusammengefaßt werden.

Die beiden wesentlichen Schritte zur Konfigurierung der Meßanordnung sind: die zonenbezogenen Daten der Meßstrecke werden aus der Datenbibliothek entnommen und an die Meßanordnung übermittelt und aus der Datenbibliothek wird mindestens ein Parametersatz zur Bearbeitung mindestens einer zuvor definierten Datengruppe an die Meßanordnung übermittelt.

Das Erfassen der (in der Regel analogen) Meßgrößen geschieht im physikalischen Meßgerät. Als Bearbeiten wird alles verstanden, was zur Umsetzung, Berechnung und Analyse der Meßgrößen gehört, wobei als wichtigstes das Erstellen eines streckenabhängigen Meßprofils (auch Ortsprofil) für eine oder mehrere zeitlich aufeinander folgende Messungen zu nennen ist. Die Aufgabe 'Speichern', 'Darstellen' und 'Melden' wird von vorzugsweise elektronischen Modulen der Datenverarbeitung erledigt, die dem Fachmann bekannt sind.

Neben den Vorteilen, die schon aus der Benutzung verteilter (insbesondere faseroptischer) Sensoren bekannt sind, ergibt sich eine Reihe von Vorteilen, von denen nur einige herausgegriffen werden sollen: freie Wahl der Meßpunkte auf der Sensorstrecke (Zonenbildung), geringe Wartung, einfache Überprüfung der Funktionsweise, intelligente Auswertung der Meßgrößen, Reduzierung von Fehlermeldungen, detaillierte Darstellung und Analyse der physikalischen Meßgrößen bzw. physikalischen Zustände und hohe Geschwindigkeit.

Als Anwendungsbeispiele für die Erfindung kommen Meßanordnungen infrage, die durch Konfiguration auf verschiedenste Anwendungen einstellbar sind, ohne daß eine hardwaremäßige Änderung vorgenommen werden muß. Solche Anwendungen sind Messungen in Tunneln, in Kabel- oder Lüftungskanälen, in Versorgungs- oder U-Bahn-Schächten, in Förderanlagen, in Silos, in Lagerräumen oder bei chemischen oder andere Reaktoren.

Beispielsweise kann ein optischen System nach der Erfindung als OFDR-System (z.B. nach DE 195 25 626 A1) mit mindestens einer ausgelegten LWL-Faser aufgebaut sein.

Als Beispiele für örtlich verteilte Sensoren werden genannt:
(1) optische Sensoren (US 4 812 645, DE 195 25 626 A1, DE 93 18 404 U1, DE 38 09 957 A1, DE 195 30 985 C1). Die Ausbildung und physikalische Eigenschaft eines LWL-Sensors wird wesentlich auch von seiner Umhüllung mitbestimmt (kunststoffummantelt, Stahlröhrchen, vorzugsweise Edelstahl).
(2) Beispiele für elektrische Sensorsysteme sind: endlos-Thermoelement (Prospekt der deutschen Firma mawi-therm 1986) oder in DD 9283 (03.03.1955) oder eine Meßkette aus Meßwiderständen siehe DE 41 27 646 oder auch im Aufsatz WASSERWIRTSCHAFT 83 (1993) S. 206-208,211-213. Bei verteilt angeordneten Meßwiderständen (beispielsweise PT100-Widerstände) oder Endlos-Thermoelementen spricht man auch von örtlich 'quasiverteilten' Sensoren.

Je nach Art und Anschluß des Sensors, kann dieser sowohl in Vorwärts- als auch in Rückwärtsrichtung meßbar sein. Beim Einsatz mehrerer Sensoren auf einer Meßstrecke ist zu unterschieden, ob die Sensoren am Ende (über Spleiß) verbunden sind oder nicht .Eine weitere (jedoch aufwendige) Meßmethode könnte darin bestehen, an jedem Ende eines Sensors eine Meßanordnung (redundant) anzukoppeln. Beide Meßanordnungen können unabhängig voneinander konfiguriert und benutzt werden.

Die Bestandteile von Parametersätzen der Konfigurierungsdateien der Bibliothek sind (siehe auch Tab. 1):
1. Sensorspezifische (meßstreckenbezogene) Parametersätze (Geometrie und Verlegung)
   Diese Parametersätze werden durch die physikalische Eigenschaft des Sensors, die örtliche Position des Sensors und die Verlegegeometrie bestimmt und werden auch zonenbezogene Parametersätze der Meßstrecke genannt. Die Parametersätze werden im wesentlichen herangezogen, um die zonenbezogenen Meßdaten der Meßstrecke in Datengruppen zusammenzufassen (wie in unter Nr. 4 ausgeführt).
2. Meßgerätspezifische Parametersätze
   Diese Parametersätze werden durch die Physik der Meßtechnik (z.B. optische oder elektrische Eigenschaften) bestimmt.
3. Organisation der Software und zugehöriger Hardware
   Diese Parametersätze werden benötigt, um Daten, Programme und elektronische Module (Speicher, Wiedergabemedien usw.) zu steuern und zu organisieren.
4. Datengruppierungen
   Mit diesen Parametersätzen werden Einzelmeßgrößen (aus physikalischer und Ortsinformation bestehende Meßdaten) zu Datengruppen zusammengefaßt, wobei sich die Gruppenbildung an der frei wählbaren oder vordefinierten Zoneneinteilung der Meßstrecke orientiert. Es kommt zu einer Zuordnung orts- bzw. zonenbezogener Daten der Meßstrecke zu den Meßdaten selbst.
5. Parametersätze zur Bearbeitung und zur Analyse (Bearbeitungswerkzeuge)
   Mit diesen Parametersätzen werden die Werkzeuge festgelegt, mit denen die Daten oder Datengruppen ausgewertet, analysiert und bearbeitet werden, beispielsweise mit besonderen Rechenalgorithmen oder Transformationen.
6. Darstellung der Daten (Darstellungswerkzeuge)
   Diese Parametersätze werden herangezogen, um die Meßdaten (auf Meßdatenprofile) darzustellen und/oder auszugeben (Visualisierung, Ansichten, Farbpaletten, Hardcopy, Druck usw.).
7. Kommunikationsparametersätze (Kommunikationswerkzeuge)
   Mit diesen Parametersätzen sind die Protokolle und Adressen für die Datenübertragung und Auslöseaktivitäten festgelegt.

Die Erfindung sieht eine möglichst vollständige Systemkonfiguration der Meßanordnung vor. Sowohl sämtliche Meßparameter, also auch alle Parameter, die die Anwendung bezüglich Organisation, geometrischer Abmessungen und Gruppierungen (Lage oder Verlauf, ein- oder mehrdimensionale Geometrie, Orte und Zonen-Abschnitte des Sensors), der anzuwendenden Analyse- und Ereignisverarbeitungssätze betreffen, sind in den Parametersätzen der Konfigurierungsdateien abgelegt. Anderer Inhalt der Parametersätze sind beispielsweise Daten zur zeitweisen und/oder zonenweisen Auswertung des Sensors, Wahl der Ortsauflösung (Zeitzyklen, Meßgenauigkeiten durch statistische Mittelungsverfahren), Wahl der örtlichen Meßabschnitte oder Zonen, physikalische Extremwerte, die zu Alarm führen sollen, räumliche Profile der Meßdaten, Parametrierung (Physik) des Sensors. Auf diese Weise enthält die Bibliothek mögliche Konfigurationen, die für den jeweiligen Einsatz auswählbar sind. Das System läßt weiterhin jederzeit Ergänzungen der Bibiothek mit Parametersätzen zu.

Bei Wegfall einer Konfigurierung durch Fehler oder bei Verzicht auf eine bestimmte Konfigurierung wird eine bestimmte Konfigurierungsdatei mit Standardwerten (entweder für den Fehlerfall oder für den Fall der nicht erfolgten manuellen Konfiguration) benutzt. Im manuellen Dialog mit der Meßanordnung über ein Interface sind jederzeit weitere Konfigurierungsdateien aus der Bibliothek auch als Ableitung von bereits bestehenden Einträgen zur Konfiguration ladbar.

Für den Hersteller einer nach der Erfindung konfigurierbaren Meßanordnung ergibt sich der Vorteil, daß sich eine Meßanordnung sehr detailliert auf die Anforderungen des Kunden konfigurieren läßt. Der Kunde hat den Vorteil, daß er neben der 'regelrechten' Konfigurierung weitere Konfigurationen vorbereiten kann, die für bestimmte Situationen (Reparaturarbeiten, Umbaumaßnahmen, Wechsel des Sensors) im Bedarfsfall einsetzbar sind.

Eine wichtige Funktion der Meßanordnung ist die Einteilbarkeit der Sensormeßstrecke in beliebige Zonen (örtlich begrenzte Abschnitte des Sensors). Neben der Einteilung sind auch jeweils die Genauigkeit (Ortsauflösung), Analysemethoden, Alarmmeldekriterien und andere Größen der Messung im Einzelnen und zonenbezogen frei wählbar. Besondere Zonenbereiche können sein die Vorlaufstrecke des Sensors (vom Meßgerät bis zur eigentlichen Meßstrecke), normale Zonen (Streckenabschnitte) oder besonders kritische. Weiterhin besteht die Möglichkeit, einen Zonentitel, den Zonentyp, der angibt auf welche Ereignisse das Meldesystem reagiert, sowie einen lokal gültigen Satz von Analyseparametem jeder Zonen zuzuordnen.

Die lokalen Analyseparametersätze enthalten die für jede Zone gültigen örtlichen und zeitlichen Charakteristiken zur Auslösung einer Meldung (Ereignisverarbeitung) über Anomalien der Meßgröße, so daß spezifische örtliche Gegebenheiten in der Meßgrößenanalyse berücksichtigt werden. So läßt sich zum Beispiel der starke Einfluß eines möglichen Tagesgangs einer Meßgröße berücksichtigen und damit das Fehlalarmverhalten minimieren. Weiterhin zählen zu den lokalen Analyseparametem lokal auf die Meßgrößenverteilung anzuwendende Rechenoperationen. Allgemein definierte beliebige Werkzeuge (Programme und/oder Rechenalgorithmen) können mit in die Analyse eingebunden werden und dienen der Bearbeitung der Meßgrößen, wenn zum Beispiel der Sensor durch Unzugänglichkeit etc. nicht direkt in die zu überwachende Anlage integriert werden kann. Mit Hilfe physikalischer sowie mathematischer Modellierung wird dann eine Transformation von der erfaßten (beispielsweise durch starke Wärmedämmung verminderter Temperaturmeßgröße) zum tatsächlichen Meßwert vorgenommen.

Mit dem Start der Konfigurierung werden die ausgewählten Konfigurierungsdaten allen relevanten Modulen der Meßanordnung übertragen und diese programmiert. Die Module müssen nicht hardwaremäßig Einzelkomponenten sein, sie können auch in einem Rechner insgesamt integriert sein. Die wesentlichen Module sind im Einzelnen: das physikalische Meßgerät, das Modul zur Meßgrößenanalyse und das Steuergerät für weitere verbundene Module. Man bedient sich elektrischer und/oder optischer Übertragungskanäle nebst üblicher Übertragungprotokolle, die auch Datenfernübertragung für Module in örtlicher Entfernung zu den restlichen Modulen der Meßanordnung erlauben. Die Überwachung des Meßablaufs sowie die Funktionskontrolle der Sensoren erfolgt auf einem Monitor. Dieser Monitor kann bei Bedarf auch mit dem Monitor des Moduls zusammenfallen, das für die Konfigurierung eingesetzt wird.

Vorzugsweise wird ein besonderer Verfahrensschritt für eine Defektsituation eingesetzt, wobei nach dem Start oder auch während des Betriebs des Meßgeräts eine Überprüfung aller Komponenten des Meßgeräts und besonders des mindestens einen Sensors auf mechanischen Defekt erfolgt, und bei Ermittlung einer Betriebsstörung oder eines Defekts ein aktueller Parametersatz verändert oder ein zusätzlicher Parametersatz geladen wird, der Parameter enthält, die eine Betriebsstörung oder einen mechanischen Defekt berücksichtigen. Bezüglich eines Defekt des Sensors kann hierzu eine Funktionskontrolle der Meßanordnung und des oder der Sensoren mit Hilfe eines Bearbeitungsschritts der Rohmeßgrößen (im optischen Fall sind das Rückstreukurven) durchgeführt werden. Nach der Bestimmung des gemessenen Sensorendes (beispielweise ein durch Bruch verkürzter Sensor), wird im Vergleich mit den konfigurierten Zonenanordnungen und mit allgemeinen Plausibilitätsregeln in der Meßanordnung festgestellt, ob der Sensor in seiner Funktionsweise beeinträchtigt oder sogar zerstört ist. Mit Hilfe des veränderten oder des zusätzlichen Parametersatzes werden Störungen für alle betroffenen Zonen signalisiert und zusätzlich der genaue Ort der Störstelle angegeben. Sofern der Sensor in redundanter Form (paralleler Doppelsensor) verlegt wurde, kann durch wechselseitiges Messen über beide Sensoren, soweit sie noch intakt sind, die Störstelle überbrückt werden. Mit dem erwähnten Parametersatz entsteht so eine Rückfalloption für die Konfigurierung, so daß ohne äußeren Eingriff eine zuverlässige Messung stattfindet, auch wenn ein Sensorbruch vorhanden ist.

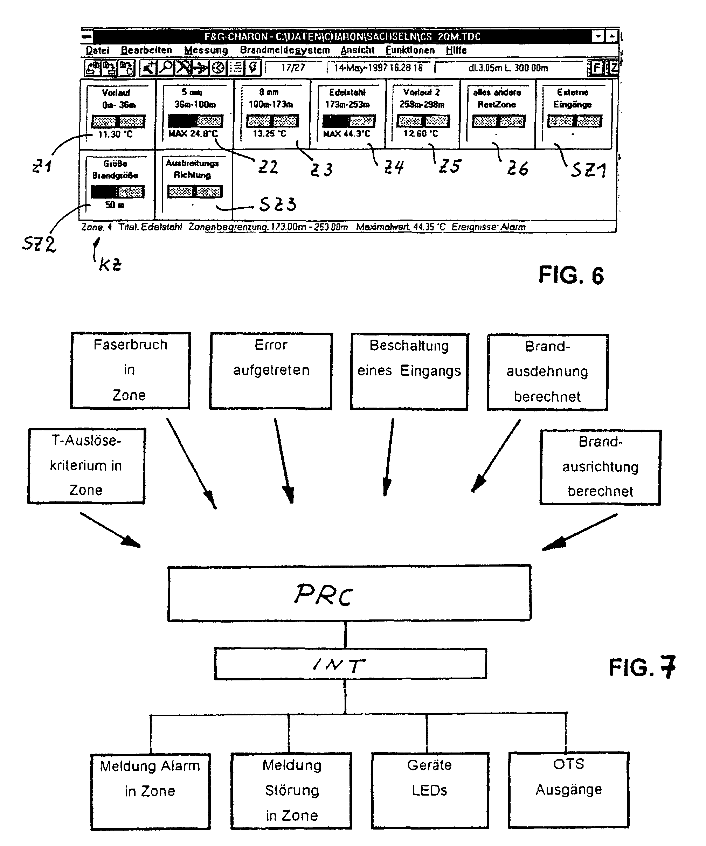

Im Einsatz liefert die Meßanordnung nach vordefinierten Meßzyklen ein örtlich verteiltes Meßgrößenprofil über die Sensorstrecke. Nach Abschluß eines Meßzyklusses werden aus den Rohmeßgrößen in einem Modul 'Analyseeinheit' Meßgrößenprofile berechnet und gespeichert. Dabei erfolgt aus den vorliegenden Meßgrößenkurven die Berechnung der Meßwerteprofile unter Berücksichtigung der zur Konfigurierung eingesetzten Parametersätze. Die berechneten örtlichen Datenverläufe werden gespeichert. Sie sind jederzeit abrufbar und auch mit denen aus vorangegangenen Messungen verknüpfbar. Die allmählich anwachsenden Meßwertebestände, welche im einfachsten Fall einer nichtflächigen Sensoranordung als dreidimensionale örtlich-zeitliche Meßwerteverteilung dargestellt werden können (vgl. **Fig. 6**), bieten die Basis für die Detektion von Anomalien der Meßgröße(n).

Unter Bearbeitung der Meßgrößen wird die Analyse der Meßgrößen sowie die anschließende Ereignisverarbeitung verstanden. Die Meßgrößen als dreidimensionale örtlich-zeitliche Datenverteilung werden bezogen auf die Zonengruppierungen mit Hilfe der lokal gültigen Auslösekriterien geprüft. Neben einem auf das Meßobjekt lokal abgestimmten Extremwert, kann zusätzlich eine gestaffelte individuell abstimmbare Differentialcharakteristik zur Melde- oder Alarmauslösung herangezogen werden. Weitere Typen von Auslösekriterien sind in Rechenalgorithmen oder Werkzeugen eingebunden oder können der Bibliothek hinzugefügt werden. Mit steigender Anzahl gespeicherter Meßzyklen wird die Beurteilung auf Anomalien zunehmend präziser, da die meßtechnische Vergangenheit einer Zone ebenfalls Berücksichtigung findet. Unter Beachtung der Verlegegeometrie des Sensors werden auf Basis der in einer Zone örtlich zusammengehörenden Meßorte, die ein Auslösekriterium erfüllen, die Ausdehnung von Anomalie der Meßgrößen - zum Beispiel die Ausdehnung einer Temperaturanomalie (Brandherd) - berechnet. Neben der Ausdehnung kann im Spezialfall die Ausbreitungsrichtung eine wichtige Größe sein (vgl. Schadensbehebung oder Brandbekämpfung). Diese wird einerseits durch die Variation von geometrischen Schwerpunktsberechnungen oder auch für die Ausdehnung herangezogenen Meßorteauswahl und durch Mustervergleich mit charakteristischen Meßgrößenprofilen bestimmt.

Die aus der Analyse hervorgegangenen Ereignisse (Auslösekriterium in einer bestimmten Zone erfüllt, Ausbreitungsrichtung berechnet oder Fehler aufgetreten etc.) werden über die Ereignisverarbeitung, deren Einzelschritte ebenfalls konfigurierbar sind, in der Meßanordnung umgesetzt. Mit den gewählten Konfigurierungsdaten lassen sich eine auf die Anwendung bezogene Bearbeitung auftretender Ereignisse durchführen. Als Ereignisse, die jeweils Auslösekriterium sein sollen, können definiert werden: Überschreiten einer vorgewählten Meßgröße, einer vorgewählten zeitlichen (positiven oder negativen) Meßgrößenänderung, Abweichen eines räumlichen Datenprofils von einem vorgewählten Profil, Betriebsstörung des Lasers, Betriebsstörung durch Stromausfall usw. Die Ereignisverarbeitung realisiert eine Meldung (Abbildung) von jedem Ereignis auf einen Adreßpunkt, beispielsweise die Übermittlung eines Signals vom Notstromaggregat, welches die Meldung enthält, daß die Stromversorgung vom Stromnetz auf das Notstromaggregat umgeschaltet worden ist. Ist einem Ereignis kein Adreßpunkt zugeordnet, so kann die Meldung dieses Ereignisses unterdrückt oder an ein Sammeladreßpunkt gemeldet werden. Gemeldete Signale an Adreßpunkte können neben der Veranlassung der Änderung der Konfiguration in verschiedenster Weise weiterbearbeitet werden: optische Darstellung, akustisches Signal, Betätigung von Schaltern, Klappen, Sprinklern usw.

Die über die Ereignisverarbeitung erzeugten Signale werden mittels eines Interfaces an gekoppelte Systeme und/oder zugehörige Adreßpunkte übertragen. In der Meßanordnung integriert ist eine Anzahl von potentialfreien Kontakten. Diese sind ebenfalls durch die Konfiguration der Ereignisverarbeitung beliebigen Adreßpunkten zuordbar. Mit einer eingebundenen Visualisierungssoftware besteht die Möglichkeit, Ereignisdarstellungen oder auch anwendungsbezogene Datenvisualisierungen zu erzeugen. Weiterhin werden von der Meßanordnung ausgegebene Prozeßgrößen ("Ereignisse") zur Steuerung weiterer Anlagen, wie Managementsysteme, oder zur Weitergabe an örtlich entfernte Stellen mittels Datenfernübertragung benutzt.

Ein weiterer bevorzugter Verfahrensschritt besteht darin, daß ein bestimmter, vorgespeicherter Parametersatz zum Konfigurieren automatisch verwendet und ein zuvor verwendeter Parametersatz überschrieben wird, wenn die Meßanordnung in einen Notstrombetrieb übergeht.

Vorzugsweise soll als Sensor mindestens ein faseroptischer Sensor und als Meßgerät ein reflektrometrisches Meßsystem (OTDR oder OFDR-System) eingesetzt werden. So soll auch die Erfindung an Hand eines Ausführungsbeispiels "Meßanordnung (OFDR-System) für die Temperaturmessung und Brandmeldung in einem Tunnel" ausführlich beschrieben werden. Bezüglich eines zweiten Anwendungsbeispiels 'Deponieüberwachungssystem' werden weitere Ausführungen gemacht. Zur Beschreibung werden die folgende Tabelle und mehrere Figuren benutzt. Sie zeigen im Einzelnen:
Tabelle 1: Bestandteile von Konfigurierungsdateien der Bibliothek am Beispiel einer faseroptischen Temperaturmessung,
Fig. 1 schematische Darstellung einer Meßanordnung,
Fig. 2 drei Temperaturprofile,
Fig. 3 zeitlich aufgefächerte Temperaturmessungen,
Fig. 4 Mäanderanordnung eines Sensors,
Fig. 5 Flächenmuster eine Messung und
Fig. 6 Zonen-Visualisierung.

In Tabelle 1 sind in sieben Gruppen die Bestandteile von Konfigurierungsdateien der Bibliothek am Beispiel einer faseroptischen Temperaturmessung zu finden.

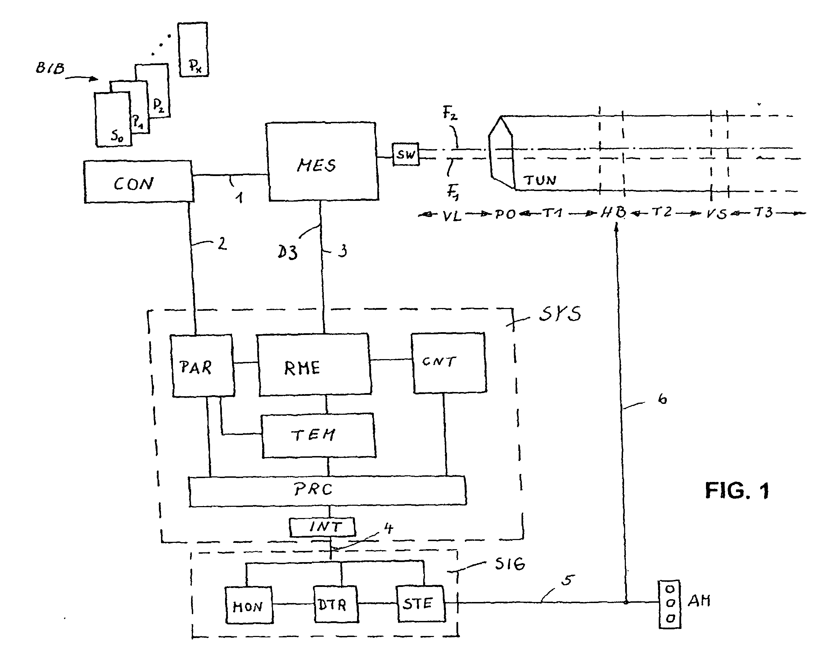

In **Fig. 1** wird ein Ausführungsbeispiel einer Meßanordnung (100) dargestellt, wo zwei LWL-Sensoren in einem Tunnel ausgelegt sind. Mit der Meßanordnung sollen thermische Meßgrößen oder Zustände im Tunnel überwacht werden und zur Brandalarmmeldung herangezogen werden.

Die Meßstrecke mit zwei Sensoren F1, F2 hat mehrere Abschnitte: Vorlauf VL vor dem Tunneleingang, Tunnelportal PO, drei Zonen T1, T2, T3 im Tunnel TUN, eine Haltebucht HB für PKWs, ein Versorgungsschacht VS. Durch Konfiguration läßt sich die Meßstrecke als Ganzes oder in Teilen in Abschnitte oder Zonen einteilen. Eine solche Konfiguration könnte z.B. sein: unterdrückte Datenwiedergabe im Vorlauf VL; Portal 1 mit einer Zone; Strecke T1 mit zwölf Zonen; Haltebucht mit zwei Zonen; Strecke T2 mit zehn Zonen; Strecke T3 mit zehn Zonen; Schacht VS mit zwei Zonen; eine weitere Strecke mit zwölf Zonen; das Ausgangsportal mit einer Zone und Faserende (Spleiß) eine Zone.

Die physikalischen (analogen) Meßgrößen der Sensoren F1, F2 werden vom physikalischen Meßgerät MES erfaßt. Ein Schalter SW soll andeuten, daß Einzelmessungen über jeden Sensor möglich sind. Das Meßgerät kann beispielsweise ein OFDR-System sein. Ein Bedienmodul CON (In der Regel mit Dateneingabegerät und Monitor) dient der Kontrolle des Meßgeräts und der Konfigurierung. Die Konfigurierungsdateien mit den Parametersätzen S₀,P₁,P₂, ... der Bibliothek BIB werden über das Bedienmodul ausgewählt und die jeweiligen Module programmiert. Die Verbindungen der Module untereinander (oder entsprechende Datenkanäle) sind mit den Leitungen 1, 2 ... bis 6 angedeutet.

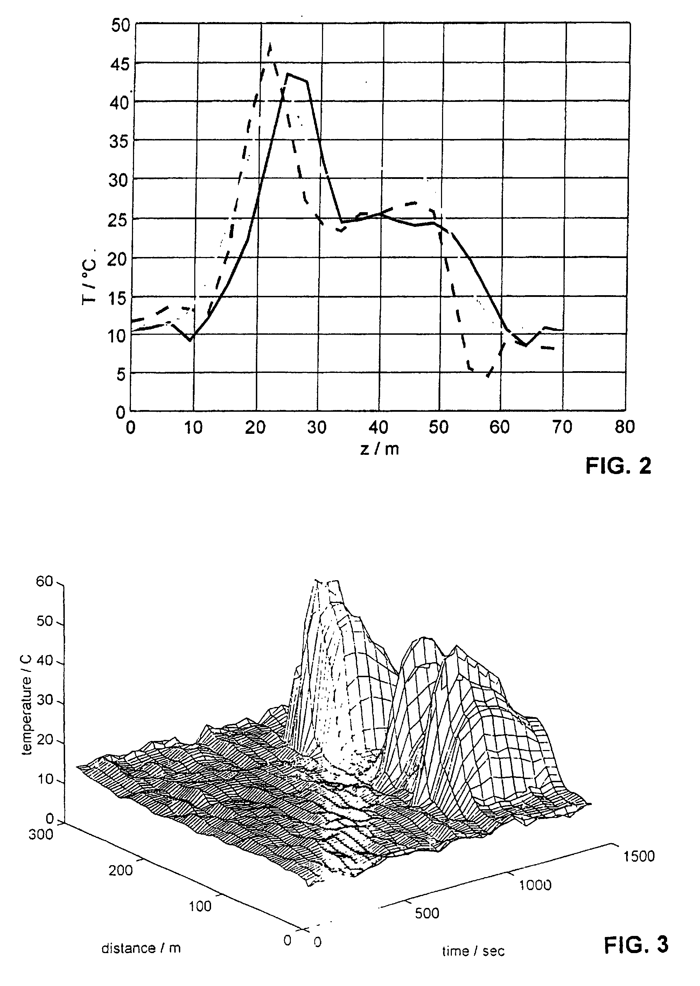

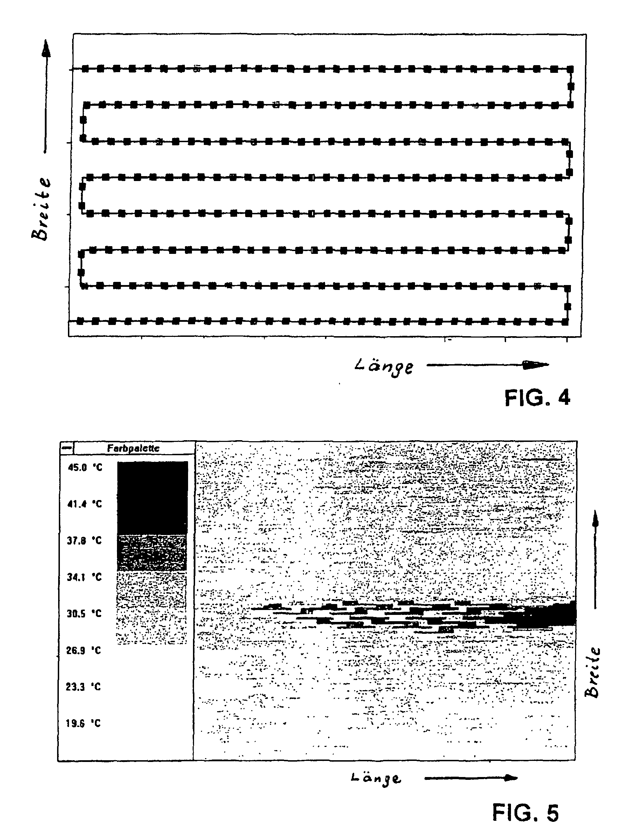

Die (digitalen) Rohmeßdaten D3, die das Meßgerät MES liefert, laufen über die Leitung 3 zum Sammel- oder Speichermodul RME. Ein Modul CNT dient der Funktionskontrolle aller anderen Module. Vorzugsweise werden der oder die Sensoren oder das Meßgerät auf Funktionstüchtigkeit überprüft. Als wichtigste Maßnahme kommt dabei die Prüfung auf Sensorbruch infrage. Das Modul PAR ist im wesentlichen die Einheit, die die Konfigurierungsdaten speichert und/oder verwaltet. Die Rohmeßdaten D3 werden im Modul TEM in örtliche und/oder zeitliche Meßprofile umgerechnet. Typische Meßprofile sind in den Fig. 2, und 5 dargestellt. Der Vorteil der Konfigurierung zeigt sich beispielsweise darin, daß die Meßgrößen für die Zone des Sensorvorlaufs VL anfallen, aber diese nicht weiter in Meßprofile eingebunden werden. Dadurch entfällt Rechenzeit und der Auswertevorgang wird beschleunigt.

Das zentrale Modul der Meßanordnung ist die Verarbeitungseinheit PRC, die über eine Schnittstelle INT mit der Leitung 4 mit der 'Außenwelt' in Verbindung steht. Über die Leitung 4 werden die Meßwerte ausgegeben. Die Einheit PRC kann auch Speicherung und Verwaltung der Daten umfassen. Über die Schnittstelle INT werden beispielsweise ein Monitor MON, ein Modem DTR zur Datenübertragung und/oder ein Steuerungsmodul STE erreicht. Die Module MON,DTR,STE sind als Signalisierungs- oder Visualisierungseinheit SIG elektronisch bzw. als Mikrorechner zusammengefaßt.

Aus der Meßwertbearbeitung abgeleitete Signale (Ereignisse oder Auslösesignale) werden vom Steuerungsmodul STE über eine Leitung 5 zu optischen und/oder akustischen Anzeigegeräte AM oder zu Geräten oder Aktuatoren im Tunnel (über Leitung 6) gesandt, wo beispielsweise Klappen oder Löscheinrichtungen betätigt werden können.

In **Fig. 2** sind drei gemessene Temperaturprofile wiedergegeben. Die Profile unterscheiden sich in ihren Maximalwerten, in den Anstieg- oder Abfallflanken, in der Lage des Schwerpunkts unter den Kurven und in ihrer Längenausdehnung. In der Konfigurierung werden mit entsprechender Bandbreite Maximalwert, Anstieg- oder Abfallflanken, Lage der Schwerpunkte, Längenausdehnung zahlenmäßig als Mustervorrat vorgegeben, so daß ein Vergleich der Meßwerte mit solchen Mustern erfolgen kann. Die drei Temperaturprofile der **Fig. 2** würden bei entsprechender Konfigurierung jeweils auf einen 'Brand-Typ' hinweisen, der sich durch die Geschwindigkeit der Brandentwicklung (Anstiegflanke dT/dt) auszeichnet. Dem liegt zugrunde, daß brennbare Chemikalien (Benzin, Dieselkraftstoff, Kunststoffe) jeweils eine bestimmte Art der Brandentwicklung (Anstiegflanke) haben. Mit diesen Daten werden in der Konfiguration die Melde- oder Alarmsignale verknüpft, so daß schon in der Alarmmeldung ein Hinweis auf eine bestimmte Art der Brandentwicklung (oder einer Chemikalie) gegeben werden kann. Aus der Lage des Schwerpunkts läßt sich feststellen, ob sich der Brand symmetrisch um einen Ort entwickelt oder ob eine örtliche Verschiebung stattfindet. Eine Abweichung von der Symmetrie weist beispielsweise auf Luftbewegung und Brandfortsetzung hin. Für die Brandbekämpfung sind solche Angaben wichtig. An diesem Beispiel wird deutlich, daß bestimmte Signale (Auslösevorgang, Alarm) erzeugbar sind, die durch die Meßgrößen (Temperaturanstieg) determiniert sind. Bei der Vorgabe eines schnellen Temperaturanstiegs als Alarmsignal, würde beispielsweise der Tagesgang der Temperatur nicht zu einer Alarmmeldung (Fehlmeldung) führen, da der Temperaturtagesgang schwächer verläuft als ein Brand.

In der Konfiguration wird berücksichtigt, daß die physikalische Eigenschaften (z.B. Temperaturänderung) vom Typ, vom Aufbau (Sensor ohne Umhüllung, Sensor in Metall- oder Kunststoffhülle) und Installationsumgebung des Sensors abhängen. Mit der Vorgabe dieser Werte in der Konfiguration lassen sich sehr detailliert alle physikalischen Größen (besonders wichtig sind Wärmeleitung und/oder dämmung) berücksichtigen. Bei Änderung der Konfiguration werden alle zusammengehörigen physikalischen Größen geändert.

In **Fig. 3** ist ein thermisches Ortsprofil (als Basisdaten zur Systemanalyse auf thermische Anomalien) in zeitlicher Aufeinanderfolge (im Minutenabstand) auf einer Strecke von 300 Metern dargestellt. Man erkennt, daß etwa 1.000 sec nach Beginn der Messung ein Temperaturanstieg an drei Stellen der Meßstrecke auftritt. Wie schon erwähnt, werden mit Hilfe solcher Zeitreihen oder Basisdaten vom System an Hand konfigurierter Analyseparameter thermische Anomalien (Intensität, Ausdehnung, Ausbreitungsrichtung) zu jeder Zeit erkennbar, wobei das Frühstadium eines Brandes besonders von Bedeutung ist.

In **Fig. 4** ist eine Mäanderanordnung eines Sensors gezeigt. Eine solche Anordnung könnte beispielsweise in der Grundschicht einer Deponie ausgelegt sein. Das zugehörige flächige Temperaturprofil findet sich in Graustufendarstellung in **Fig. 5**. Durch die Konfigurierung ist vorgegeben und eingestellt, daß Meßgrößen des linearen Sensors zu einem Flächenbild zusammengesetzt werden. Meßgrößen von unterschiedlich weit voneinander entfernten Orten auf dem Sensor werden entsprechend ihrer geographischen Lage in Nachbarschaft gebracht. Je nach Aufbau der Deponie sind bestimmte Flächenbereiche der Deponie in Zonen unterteilt, deren Daten zu Datengruppen zusammengefaßt werden. In gleicher Weise lassen sich dreidimensionale Anordnungen eines Sensors (z.B. Umwickelung eines Reaktorgefäßes) in ein Flächenbild umsetzen.

In **Fig. 6** ist ein Beispiel einer Monitor-Visualisierung einer Meßstrecke in einem Tunnel In Zonendarstellung zu finden. Dargestellt sind sechs eingerichtete Zonen Z1 bis Z6 mit Angabe ihrer örtlichen Ausdehnung. In den Feldern Z1 bis Z6 steht in der ersten Zeile eine Zonenbezeichnung bzw. ein Hinweis auf den physikalischen Aufbau des Sensors. '5 mm' oder '8 mm' bedeuten, daß der Sensor in einer Kunststoffhülle bestimmter Dicke liegt. 'Edelstahl' bedeutet, daß der Sensor in einer Metallhülle liegt. Die zweiten Zeile der Felder gibt Längen der Streckenabschnitte des Sensors wieder. In der unteren Zeile werden im thermischen Normalzustand der Temperaturmittelwert, im Alarmzustand die Maximaltemperatur der Zonen angezeigt. Zusätzlich erfolgt eine Alarm/Störungsanzeige mittels stilisierter Kontrollampen (in Z2, Z4, SZ2 als schwarzes Rechteck). In einer Kommentarzeile KZ sind weitere Einzelheiten zu jedem Feld darstellbar oder abrufbar. Darüberhinaus sind drei Sonderzonen SZ1 bis SZ3 dargestellt, die zur Visualisierung von zusätzlicher Information genutzt werden. SZ2 stellt in diesem Beispiel die vom System aus den Meßdaten berechnete örtliche Ausdehnung eines Brandes im Tunnel dar.

In **Fig. 7** ist schematisch die Ereignisbehandlung dargestellt. Je nach Ereignis (obere Reihe) werden in der Verarbeitungseinheit PRC über die Schnittstelle INT verschiedene Meldungen ausgegeben, oder Adreßpunkte, Geräte oder Ausgänge aktiviert.

**Tabelle 1:**

| Bestandteile von Parametersätzen der Konfigurierungsdateien am Beispiel einer faseroptischen Temperaturmessung |
|---|
| **1. Parametersätze zur Geometrie und zur Sensorverlegung** |
| Sensorverlegegeometrie (linear, flächig, räumlich) Beschreibung der Geometrie (flächenhaft, räumlich) Vorlauflängen Position und Adressierung der Sensoren in Fläche, Raum Kalibrierpunkte, Bezugspunkte, Doppellagen, Positionen bestimmter Objektteile redundanter Aufbau (z.B. Doppelfaser) |
| |

| **2. Meßgerätspezifische Parametersätze** |
|---|
| Sensorlänge Temperaturgenauigkeit (Mittelungsrechnung) Ortsauflösung (Mittelungsrechnung) Mittelungszeit Kalibrierung Korrekturparameter Verstärkungsfaktoren spezifische Sensorparameter (z.B. optischer Gruppenindex einer oder mehrerer Fasern) |
| |

| **3. Organisation von Daten, Programmen, Speichern, Wiedergabemedien** |
|---|
| Auswahl und Steuerung beteiligter Programme (Visualisierung, Datenübertragung, Datenlogger) Verweise auf benötigte Dateien Pfadangaben Standard-Dateinamen, Standard-Titel, Standard-Beschreibungen für die Datendateien Meßdatenspeichermanagement Fenstergrößen und Fensterzahl auf dem Bildschirm zu bearbeitende Signaldaten Ereignisbehandlung: Zuordnung von Ereignisse zu Adreßpunkten |
| |

| **4. Datengruppierungen** |
|---|
| lineare, flächenhafte oder räumliche Zonenanordnungen zonen- oder datengruppenbezogene Werkzeuge, Analysemelhoden, Auslösesätze Verweise auf Zonendefinitionen |
| |

| **5. Bearbeitungs- und Analysemethoden und -werkzeuge** |
|---|
| Angebote an Werkzeugen (einbindbare Rechenalgonthmen zur Vorverarbeitung der Meßdaten) Verweise auf Definition der Werkzeuge Parameter für Werkzeuge durchzuführende Meßwerttransformationen Auslösesätze: Schwellwert, Gradienten, Abweichungen von Normal, spezifische Standardauslöseparametersätze Parametersätze für spezielle Analysemethoden, sowie Verweise auf Definition (z.B. bei Wärmemelder: Brandgröße, Brandrichtung oder z.B. bei Deponieüberwachung: Leckage-, Hot Spot-Detektion) |
| |

| **6. Darstellung der Daten (Visualisierung, Hardcopy, Druck)** |
|---|
| Anwendungsspezifische Darstellungsparameter (lineare Darstellung, Meßgröße über Ort; flächenhafte Darstellung gemäß der Sensoranordnung; dreidimensionale Darstellung, erfaßte Objekte) Darstellungsbereiche Farbpaletten Ereignissymbole Beschriftungen Hilfslinien, Hilfssymbole Auswahl und Umfang der Darstellung Bedienungsoptionen Koordinatensysteme Perspektiven, Ansichten |
| |

| **7. Kommunikationsparametersätze und -werkzeuge *(Datenübermittlung)*** |
|---|
| Protokolldefinitionen Übertragungsbandbreiten Kommunikationsanschlüsse Netzwerkadressen Festlegung von Art und Umfang ausgetauschter Daten |

## Patentansprüche

1. Verfahren zur Konfigurierung einer Meßanordnung (**MES, SYS, SIG)** für physikalische Meßgrößen auf einer Meßstrecke **(TUN),** die mit mindestens einem Sensor (**F1, F2)** belegt ist, der aus Streckeninformationen und physikalischen, insbesondere thermischen Daten bestehende Meßgrößen über ein Meßgerät **(MES)** liefert, wobei
• die Meßanordnung (**MES, SYS, SIG)** aus programmierbaren Modulen **(MES, PAR, RME, CNT, PRC, SIG**) besteht, mit denen die Meßgrößen erfaßt, bearbeitet, gespeichert, dargestellt und/oder gemeldet werden können und
• eine Datenbibliothek (**BIB**) mit Sätzen von Konfigurierungsparametern (**S**_{**0**}**,P**_{**1**}**,P**_{**2**}**...**) und mit Daten über den Zonenaufbau (**T1,T2,T3**) der Meßstrecke vorhanden ist und
• die Meßanordnung so programmiert ist, daß zonenbezogenen Daten der Meßstrecke **(TUN)** zonenbezogenen Meßgrößen (**D3**) zugeordnet und diese Daten zu Datengruppen zusammengefaßt werden,
und zur Konfigurierung folgende Schritte durchlaufen werden:
1. zonenbezogene Daten der Meßstrecke **(TUN)** werden aus der Datenbibliothek (BIB) entnommen und an die Meßanordnung **(MES, SYS, SIG)** übermittelt und
2. aus der Datenbibliothek **(BIB)** wird mindestens ein Parametersatz (**S**_{**0**}**,P**_{**1**}**,P**_{**2**}**...**) zur Bearbeitung mindestens einer Datengruppe an die Meßanordnung **(MES, SYS, SIG)** übermittelt.

2. Verfahren nach Anspruch 1, **dadurch gekennzeichnet, daß** aus der Datenbibliothek **(BIB)** mindestens ein zonenspezifisch definierter Parametersatz (**S**_{**0**}**,P**_{**1**}**,P**_{**2**}**...**) zur Bearbeitung der Datengruppen an die Meßanordnung **(MES, SYS, SIG)** übermittelt wird.

3. Verfahren nach Anspruch 1 oder 2, **dadurch gekennzeichnet, daß** weiterhin zur Darstellung und/oder zur Kommunikation der Meßgrößen **(D3)** aus der Datenbibliothek **(BIB)** mindestens ein entsprechender Parametersatz entnommen und an die Meßanordnung **(MES, SYS, SIG)** übermittelt wird.

4. Verfahren nach einem der vorhergehenden Ansprüche, **dadurch gekennzeichnet, daß** in dem Fall, in dem beim Start der Meßanordnung **(MES, SYS, SIG)** keine manuelle Vorauswahl von Parametersätze erfolgt, ein bestimmter, vorgespeicherter Parametersatz (**S**_{**0**}) automatisch entnommen und an die Meßanordnung **(MES, SYS, SIG)** übermittelt wird.

5. Verfahren nach Anspruch **4, dadurch gekennzeichnet, daß** ein bestimmter, vorgespeicherter Parametersatz (**S**_{**0**}) zum Konfigurieren automatisch verwendet und ein zuvor verwendeter Parametersatz überschrieben oder ein zusätzlicher Parametersatz geladen wird, wenn an einem Adreßpunkt der Meßanordnung **(MES, SYS, SIG)** eine Störung gemeldet wird.

6. Verfahren nach Anspruch 5, **dadurch gekennzeichnet, daß** ein aktueller Parametersatz verändert oder ein zusätzlicher Parametersatz geladen wird, wenn eine mechanische Veränderung eines Sensors (**F1,F2**) gemeldet wird.

7. Anordnung zur Konfigurierung einer Meßanordnung **(MES, SYS, SIG)** für physikalische Meßgrößen auf einer Meßstrecke **(TUN),** die mit mindestens einem Sensor (**F1, F2**) belegt ist, der aus Streckeninformationen und physikalischen, insbesondere thermischen Daten bestehende Meßgrößen über ein Meßgerät **(MES)** liefert,
wobei,
• die Meßanordnung (**MES, SYS, SIG**) aus programmierbaren Modulen **(MES, PAR, RME, CNT, PRC, SIG**) besteht, mit denen die Meßgrößen **(D3)** erfaßt, bearbeitet, gespeichert, dargestellt und/oder gemeldet werden können,
• eine Datenbibliothek **(BIB)** mit Daten über den Zonenaufbau (**T1,T2,T3**) der Meßstrecke (**TUN**) und mit Konfigurierungsparametern (**S**_{**0**}**,P**_{**1**}**,P**_{**2**}**...**) für die Bearbeitung zonenbezogener Meßdaten vorhanden ist und
• die Meßanordnung **(MES, SYS, SIG)** mit den Daten über den Zonenaufbau und den Initialisierungsparametern (**S**_{**0**}**,P**_{**1**}**,P**_{**2**}**...**) so programmiert ist, daß zonenbezogenen Daten der Meßstrecke (**TUN**) zonenbezogenen Meßgrößen **(D3)** zugeordnet und diese Daten zu Datengruppen zusammengefasst sind.

8. Anordnung zur Konfigurierung einer Meßanordnung nach Anspruch 7, **dadurch gekennzeichnet, daß** die Datenbibliothek **(BIB)** weiterhin Parameter (**S**_{**0**}**,P**_{**1**}**,P**_{**2**}**...**) für die Darstellung und/oder die Kommunikation der Meßgrößen **(D3)** enthält.

9. Anordnung nach Anspruch 7 oder 8, **dadurch gekennzeichnet, daß** die Datenbibliothek (**BIB**) weiterhin Parameter (**S**_{**0**}**,P**_{**1**}**,P**_{**2**}**...**) enthält, die für den Fall von Störungen der Meßanordnung **(MES, SYS, SIG)** übermitttelbar sind.

10. Anordnung nach einem der Ansprüche 7 bis 9, **dadurch gekennzeichnet, daß** als Sensor (**F1, F2)** mindestens ein faseroptischer Sensor und als Meßgerät **(MES)** ein reflektrometrisches Meßsystern eingesetzt wird.

## Claims

1. A method for configuring a measuring arrangement (**MES, SYS, SIG**) for physical measured quantities over a section to be measured **(TUN)** which is covered by at least one sensor (**F1, F2)** supplying measured quantities consisting of section information and physical, more particularly thermal data via a measuring instrument (**MES**), wherein
• the measuring arrangement (**MES, SYS, SIG**) consists of programmable modules (**MES, PAR, RME, CNT, PRC, SIG**) with which the measured quantities may be acquired, edited, saved, represented and/or signalled and
• a data library (**BIB**) is available with sets of configuration parameters (**S**_{**0**}**,P**_{**1**}**,P**_{**2**}**...**) and with data relating to the zone layout (**T1,T2,T3**) of the section to be measured, and
• the measuring arrangement is programmed so that zone-specific data of the section to be measured **(TUN)** are assigned to zone-specific measured quantities **(D3)** and these data are combined into data groups,
and, in order to effect the configuration, the following steps are run through:
1. zone-specific data of the section to be measured **(TUN)** are retrieved from the data library (**BIB**) and transmitted to the measuring arrangement (**MES, SYS, SIG**) and
2. from the data library (**BIB**) at least one parameter set (**S**_{**0**}**,P**_{**1**}**,P**_{**2**}**...**) for editing at least one data group is transmitted to the measuring arrangement (**MES, SYS, SIG**).

2. A method according to claim 1, **characterised in that** from the data library (**BIB**) at least one zone-specifically defined parameter set (**S**_{**0**}**,P**_{**1**}**,P**_{**2**}**...**) for editing the data groups is transmitted to the measuring arrangement (**MES, SYS, SIG**).

3. A method according to claim 1 or 2, **characterised in that**, furthermore, to represent and/or communicate the measured quantities **(D3)** at least one corresponding parameter set is retrieved from the data library (**BIB**) and transmitted to the measuring arrangement (**MES, SYS, SIG**).

4. A method according to any one of the preceding claims, **characterised in that**, in the situation in which there is no manual pre-selection of parameter sets on starting the measuring arrangement (**MES, SYS, SIG**), a specific, pre-saved parameter set (**S**_{**0**}) is automatically retrieved and transmitted to the measuring arrangement (**MES, SYS, SIG**).

5. A method according to claim 4, **characterised in that** a specific, pre-saved parameter set (So) is automatically used for the configuration and a parameter set used previously is overwritten or an additional parameter set is loaded when a malfunction is signalled at an address point of the measuring arrangement (**MES, SYS, SIG**).

6. A method according to claim 5, **characterised in that** a current parameter set is changed or an additional parameter set is loaded when a mechanical change of a sensor (**F1, F2)** is signalled.

7. An arrangement for configuring a measuring arrangement (**MES, SYS, SIG**) for physical measured quantities over a section to be measured **(TUN)** which is covered by at least one sensor (**F1, F2)** supplying measured quantities consisting of section information and physical, more particularly thermal data via a measuring instrument (**MES**),
wherein
• the measuring arrangement (**MES, SYS, SIG**) consists of programmable modules (**MES, PAR, RME, CNT, PRC, SIG**) with which the measured quantities **(D3)** may be acquired, edited, saved, represented and/or signalled,
• a data library (**BIB**) is available with data relating to the zone layout (**T1, T2, T3)** of the section to be measured **(TUN)** and with configuration parameters (**S**_{**0**}**,P**_{**1**}**,P**_{**2**}**...**) for editing zone-specific measurement data and
• the measuring arrangement (**MES, SYS, SIG**) is programmed with the data relating to the zone layout and the initialisation parameters (**S**_{**0**}**,P**_{**1**}**,P**_{**2**}**...**) so that zone-specific data of the section to be measured **(TUN)** are assigned to zone-specific measured quantities **(D3)** and these data are combined into data groups.

8. An arrangement for configuring a measuring arrangement according to claim 7, **characterised in that** the data library (**BIB**) also contains parameters (**S**_{**0**}**,P**_{**1**}**,P**_{**2**}**...**) for representing and/or communicating the measured quantities (**D3**).

9. An arrangement according to claim 7 or 8, **characterised in that** the data library (**BIB**) also contains parameters (**S**_{**0**}**,P**_{**1**}**,P**_{**2**}**...**) which in the event of malfunctions may be transmitted to the measuring arrangement (**MES, SYS, SIG**).

10. An arrangement according to any one of claims 7 to 9, **characterised in that** at least one fibre-optic sensor is used as sensor (**F1, F2**) and a reflectometric measuring system is used as measuring instrument (**MES**).

## Revendications

1. Procédé pour configurer un dispositif de mesure (MES, SYS, SIG) pour des grandeurs de mesure physiques sur une section de mesure (TUN) qui comporte au moins un capteur (F1, F2) qui délivre par un appareil de mesure (MES) des grandeurs de mesure constituées d'informations sur la section et de données physiques, en particulier thermiques, dans lequel :
- le dispositif de mesure (MES, SYS, SIG) est constitué de modules programmables (MES, PAR, RME, CNT, PRC, SIG) au moyen desquels les grandeurs de mesure peuvent être détectées, traitées, mémorisées, représentées et/ou communiquées, et
- une bibliothèque de données (BIB) est prévue qui comporte des ensembles de paramètres de configuration (S₀, P₁, P₂ ...) et des données relatives à la structure des zones (T1, T2, T3) de la section de mesure, et
- le dispositif de mesure est programmé de telle sorte que des données relatives aux zones de la section de mesure (TUN) sont associées à des grandeurs de mesure (D3) relatives aux zones, et ces données sont rassemblées pour former des groupes de données,
et dans lequel les étapes suivantes sont réalisées en vue de la configuration :
1. des données relatives aux zones de la section de mesure (TUN) sont lues dans la bibliothèque de données (BIB) et transmises au dispositif de mesure (MES, SYS, SIG), et
2. au moins un ensemble de paramètres (S₀, P₁, P₂...) est transmis de la bibliothèque de données (BIB) au dispositif de mesure (MES, SYS, SIG) en vue du traitement d'au moins un groupe de données.

2. Procédé selon la revendication 1, **caractérisé en ce qu'**au moins un ensemble défini de paramètres spécifique aux zones (S₀, P₁, P₂...) est transmis au dispositif de mesure (MES, SYS, SIG) en vue du traitement des groupes de données.

3. Procédé selon la revendication 1 ou 2, **caractérisé en ce qu'**au moins un ensemble de paramètres correspondant est en outre lu dans la bibliothèque de données (BIB) en vue de la représentation ou de la communication des grandeurs de mesure (D3), et est transmis au dispositif de mesure (MES, SYS, SIG).

4. Procédé selon l'une des revendications précédentes, **caractérisé en ce qu'**un ensemble déterminé de paramètres déjà en mémoire est lu automatiquement et est transmis au dispositif de mesure (MES, SYS, SIG) dans le cas où aucune présélection manuelle d'ensembles de paramètres n'est effectuée lors du démarrage du dispositif de mesure (MES, SYS, SIG).

5. Procédé selon la revendication 4, **caractérisé en ce qu'**un ensemble déterminé de paramètres déjà en mémoire (S₀) est utilisé pour la configuration automatique, et un ensemble de paramètres déjà utilisé est transféré ou un ensemble de paramètres supplémentaire est chargé lorsqu'un dérangement est communiqué à un point d'adresse du dispositif de mesure (MES, SYS, SIG).

6. Procédé selon la revendication 5, **caractérisé en ce qu'**un ensemble de paramètres présents est modifié ou un ensemble de paramètres supplémentaires est chargé lorsqu'une modification mécanique d'un capteur (F₁, F₂) est communiquée.

7. Dispositif pour configurer un dispositif de mesure (MES, SYS, SIG) pour des grandeurs de mesure physiques sur une section de mesure (TUN) qui comporte au moins un capteur (F1, F2) qui délivre par un appareil de mesure (MES) des grandeurs de mesure constituées d'informations sur la section et de données physiques, en particulier thermiques, dans lequel :
- le dispositif de mesure (MES, SYS, SIG) est constitué de modules programmables (MES, PAR, RME, CNT, PRC, SIG) au moyen desquels les grandeurs de mesure (D3) peuvent être détectées, traitées, mémorisées, représentées et/ou communiquées, et
- une bibliothèque de données (BIB) est prévue qui comporte des données relatives à la structure des zones (T1, T2, T3) de la section de mesure (TUN) et des ensembles de paramètres de configuration (S₀, P₁, P₂...) pour le traitement des données de mesure relatives aux zones, et
- le dispositif de mesure (MES, SYS, SIG) comportant les données relatives à la structure des zones et des paramètres d'initialisation (S₀, P₁, P₂...) est programmé de telle sorte que des données relatives aux zones de la section de mesure (TUN) sont associées à -des grandeurs de mesure (D3) relatives aux zones, et ces données sont rassemblées pour former des groupes de données.

8. Dispositif pour configurer un dispositif de mesure selon la revendication 7, **caractérisé en ce que** la bibliothèque de données (BIB) comporte en outre des paramètres (S₀, P₁, P₂...) pour la représentation et/ou la communication des grandeurs de mesure (D3).

9. Dispositif selon la revendication 7 ou 8, **caractérisé en ce que** la bibliothèque de données (BIB) comporte en outre des paramètres (S₀, P₁, P₂...) qui peuvent être transmis dans le cas de dérangements du dispositif de mesure (MES, SYS, SIG).

10. Dispositif selon l'une des revendications 7 à 9, **caractérisé en ce qu'**au moins un capteur à fibre optique est utilisé comme capteur (F1, F2), et un système de mesure par réflectométrie est utilisé comme appareil de mesure.
